# EUROPEAN PATENT SPECIFICATION

(11) **EP 2 028 202 B1**
(45) Date of publication and mention of the grant of the patent: **31.10.2012**
(21) Application number: 06757295.8
(22) Date of filing: 13.06.2006
(51) Int. Cl.: C08F 299/06, C08F 299/02, C08L 63/02, C08L 63/10, C08G 18/48, C08G 18/67

(54) **RADICAL POLYMERIZABLE RESIN COMPOSITION**
RADIKALISCH POLYMERISIERBARE HARZZUSAMMENSETZUNG
COMPOSITION DE RÉSINE POLYMÉRISABLE PAR POLYMÉRISATION RADICALAIRE

(43) Date of publication of application: 25.02.2009
(73) Proprietor: Showa Denko K.K., Tokyo 105-8518 (JP)
(72) Inventor: KUROKI, Kunihiro, Isesaki-shi, Gunma 372-0833 (JP); OOTSU, Naoki, Isesaki-shi, Gunma 372-0833 (JP)
(74) Representative: HOFFMANN EITLE
(86) International application number: PCT/JP2006/311860
(87) International publication number: WO 2007/144942

(56) References cited:
- WO-A1-98/10004
- GB-A- 2 289 472
- JP-A- 05 148 375
- JP-A- 06 107 750
- JP-A- 11 279 240
- JP-A- 56 100 816
- JP-A- 2002 062 645
- JP-A- 2003 040 955
- US-A- 4 824 919

## Description

### Technical Field

The present invention relates to a radical polymerizable resin composition. More specifically, the present invention relates to a radical polymerizable resin composition which may be used in FRP molded products and FRP linings such as pressure containers which require corrosion resistance, transparency, and impact resistance.

### Background Art

In general, radical polymerizable resins typified by unsaturated polyester resins, vinyl ester resins, urethane (meth)acrylic resins, polyester (meth)acrylate resins, (meth)acrylate resins, etc., are materials that provide cured products having excellent mechanical strength, water resistance, etc. With respect to such radical polymerizable resins, a curing time period can be adjusted without being influenced by atmospheric temperature by adjusting a curing agent or a promoter. Therefore, curing thereof does not take a long period of time and poor curing does not occur when the resins are treated especially at low temperatures, unlike epoxy resins. Then, the radical polymerizable resins have been conventionally widely used in coating materials, adhesives, fiber reinforced plastic (FRP) materials, etc.

Among the radical polymerizable resins, vinyl ester resins provide cured products having excellent acid resistance, alkali resistance, and cold curing properties, and hence are widely used for various applications, for example, FRP molded products such as corrosion resistant tanks and corrosion resistant FRP linings. Moreover, cured products obtained from the vinyl ester resins are transparent. Therefore, when the cured products are used as containers such as tanks, there is a merit in that the remaining amount of liquid or the like in the container can be easily confirmed.
However, since containers such as tanks manufactured using vinyl ester resins do not have enough toughness (impact resistance) to be able to withstand pressures such as external and an internal pressures and impacts from the outside, resulting in the so called problems of the occurrence of cracking due to the pressure or impact.

In contrast, in order to increase the impact resistance of the cured products, various studies have been made. For example, a resin composition containing an epoxy vinyl ester resin, a urethane vinyl ester resin, and a coreactive monomer such as styrene is known (e.g., Patent Document 1). In this resin composition, the impact resistance is improved with a second phase of the urethane vinyl ester resin which is dispersedly formed (i.e., microphase separated) in the epoxy vinyl ester resin at the time of curing.
However, this resin composition has a problem in that a transparent cured product cannot be obtained because of turbidity resulting from the microphase separation, which occurs at the time of curing.

Further, methacrylic resins (e.g., Patent Document 2) obtained by copolymerization of methyl methacrylate and a specific compound, and resin compositions (e.g., Patent Document 3) containing an acid modified epoxy acrylate which is obtained by adding polybasic acid anhydride to a part or a whole of a hydroxy group present in epoxy acrylate, a thermoplastic polymer, a compound having two or more double bonds in one molecule, and a reactive monomer having a single double bond in one molecule are also known.
Although such resins and resin compositions can provide transparent cured products having excellent impact resistance, they have problems in that the cured products have insufficient corrosion resistance, and cannot be used for containers such as tanks which require corrosion resistance.
As described above, the conventional resins or resin compositions may not successfully provide cured products excellent in all the properties of impact resistance, corrosion resistance, and transparency.

Patent Document 1: JP 2001-500177 T
Patent Document 2: JP 2003-128729 A
Patent Document 3: JP 2002-138121 A

WO 98/10004 relates to a curable resin composition which contains an epoxy vinyl ester resin and urethane vinyl ester resin. However, said document does not disclose the use of a (meth)acrylic resin obtained by selectively using PEG from among various polyalkylene glycols.

GB 2289472 relates to compositions comprising (A) bisphenol A-type epoxy (meth)acrylate with Mw of 550 or more.

US 4824919 is directed to vinyl ester/styrene mixtures added with urethane which comprises at least one polyglycol moiety and two urethane groups.

### Disclosure of the Invention

### Problems to be solved by the Invention

The present invention has been made in order to solve the above-mentioned problems, and has an object to provide a radical polymerizable resin composition which provides a cured product excellent in all the properties of impact resistance, corrosion resistance, and transparency.

### Means for solving the Problems

The present invention provides a radical polymerizable resin composition, characterized by comprising: (A) a vinyl ester resin having a weight average molecular weight of 500 to 6,000, and (B) a urethane (meth)acrylic resin obtained by reacting an isocyanate compound having two or more isocyanate groups in one molecule, a (meth)acrylic compound having one or more hydroxy groups in one molecule, and polyethylene glycol, wherein the weight average molecular weight of the urethane (meth)acrylic resin (B) is 2000 to 8000.

### Effects of the Invention

The present invention can provide a radical polymerizable resin composition which provides a cured product excellent in all the properties of impact resistance, corrosion resistance, and transparency.

### Best Mode for carrying out the Invention

The radical polymerizable resin composition of the present invention comprises a vinyl ester resin (A) having a given weight average molecular weight and a given urethane (meth)acrylic resin (B).
The vinyl ester resin (A) used in the present invention is generally a resin obtained by dissolving, in a radical polymerizable unsaturated monomer, a compound (vinyl ester) having a polymerizable unsaturated bond and obtained by a ring opening reaction of a compound containing a glycidyl group (epoxy group) and a carboxyl compound having a polymerizable unsaturated bond, such as acrylic acid. Such vinyl ester resin (A) is described in, for example, "Polyester resin handbook" (Nikkan Kogyo Shimbun, Ltd., published in 1988) or "Toryo Yogo Jiten" (edited by Sikizai Kyokai, published in 1993).
Such vinyl ester resin (A) has a weight average molecular weight of 500 to 6,000, and preferably 1,000 to 5,000. When the weight average molecular weight of the vinyl ester resin (A) is lower than 500, strength for withstanding practical use cannot be obtained. In contrast, when the weight average molecular weight exceeds 6,000, desired workability and storage stability cannot be obtained.

The vinyl ester used as a raw material of the vinyl ester resin (A) is not particularly limited, and is produced by known methods. Specifically, the vinyl ester is an epoxy (meth)acrylate obtained by reacting unsaturated monobasic acid, e.g., acrylic acid or methacrylic acid, with an epoxy resin.
Examples of the epoxy resin include aliphatic glycidylethers such as bisphenol A diglycidyl ether and high molecular weight homologues thereof, novolac polyglycidyl ether and high molecular weight homologues thereof, and 1,6 hexanediol diglycidyl ether. Among them, the bisphenol A epoxy resin, the novolac polyglycidyl ether, and bromides thereof are preferable from the viewpoint of toughness. Moreover, from the viewpoint of giving flexibility, saturated dibasic acids such as adipic acid, sebacic acid, and dimer acid may be reacted with the epoxy resin.

The radical polymerizable unsaturated monomer used as a material for the vinyl ester resin (A) is not particularly limited, and conventionally known monomers may be used. Examples of the radical polymerizable unsaturated monomer include: styrene-based monomers such as a styrene monomer, α-, o-, m-, and p-alkyl, nitro, cyano, amide, ester derivatives of styrene, chlorstyrene, vinyltoluene, and divinylbenzene; dienes such as butadiene, 2,3-dimethylbutadiene, isoprene, and chloroprene; (meth)acrylates such as ethyl (meth)acrylate, methyl (meth)acrylate, n-propyl (meth)acrylate, i-propyl (meth)acrylate, hexyl (meth)acrylate, 2-ethylhexyl (meth)acrylate, lauryl (meth)acrylate, dodecyl (meth)acrylate, cyclopentyl (meth)acrylate, cyclohexyl (meth)acrylate, tetrahydrofuryl (meth)acrylate, acetoacetoxy ethyl (meth)acrylate, dicyclopentenyloxyethyl (meth)acryalte, and phenoxyethyl (meth)acrylate; (meth)acrylic acid amides such as (meth)acrylic acid amide and N,N-dimethyl amide (meth)acrylic acid; vinyl compounds such as (meth)acrylic acid anilide; unsaturated dicarboxylic acid diesters such as diethyl citraconic acid; monomaleimide compounds such as N-phenyl maleimide; and N-(meth)acryloyl phthalimide. In addition, (meth)acrylate compounds each having two or more (meth)acryloyl groups in one molecule such as ethylene glycol di(meth)acrylate, diethylene glycol di(meth)acrylate, triethylene glycol di(meth)acrylate, polyethylene glycol di(meth)acrylate, and 1,6-hexanediol di(meth)acrylate may also be used. Those radical polyemerizable unsaturated monomers may be used alone or in combination. In addition, among them, styrene is preferred from the viewpoints of workability, cost, and curing properties.

The content of the radical polymerizable unsaturated monomer in the vinyl ester resin (A) is preferably 20 to 60% by weight, and more preferably 30 to 50% by weight. When the content of the radical polymerizable unsaturated monomer is lower than 20% by weight, the workability may decrease by an increase in the resin viscosity. In contrast, when the content of the radical polymerizable unsaturated monomer exceeds 60% by weight, desired toughness of a cured product may not be obtained.

The urethane (meth)acrylic resin (B) used in the present invention is a resin obtained by dissolving a given urethane (meth)acrylate in the radical polymerizable unsaturated monomer.
Urethane (meth)acrylate used as a raw material of the urethane (meth)acrylic resin (B) is obtained by reacting an isocyanate compound having two or more isocyanate groups in one molecule, a (meth)acrylic compound having one or more hydroxy groups in one molecule, and polyethylene glycol.

There is no limitation on the isocyanate compound having two or more isocyanate groups in one molecule, and conventionally known isocyanate compounds can be used. Examples of such isocyanate compounds include diphenylmethane diisocyanate, 2,4-tolylenediisocyanate and isomers thereof, hexamethylene diisocyanate, isophorone diisocyanate, xylylene diisocyanate, and triphenylmethane triisocyanate. These isocyanate compounds can be used alone or in combination. Among those isocyanate compounds, diphenylmethane diisocyanate which is excellent in reactivity and less harmful to the human body is preferable.
The blending amount of the isocyanate compound is preferably 5 to 90 parts by weight, and more preferably 10 to 50 parts by weight, based on 100 parts by weight of the total amount of the raw materials of urethane (meth)acrylate. When the blending amount of the isocyanate compound is lower than 5 parts by weight, desired strength may not be obtained. In contrast, when the blending amount of the isocyanate compound exceeds 90 parts by weight, desired flexibility may not be obtained.

The (meth)acrylic compound having one or more hydroxy groups in one molecule is not particularly limited, and conventionally known compounds may be used. Examples of the (meth)acrylic compound include 2-hydroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, tris(hydroxyethyl)isocyanurate di(meth)acrylate, and pentaerythritol tri(meth)acrylate. Those (meth)acrylic compounds may be used alone or in combination. In addition, among those (meth)acrylic compounds, 2-hydroxyethyl (meth)acrylate and 2-hydroxypropyl (meth)acrylate are preferred from the viewpoints of cost and safety.
The blending amount of the (meth)acrylic compound is preferably 5 to 90 parts by weight, and more preferably 10 to 50 parts by weight, based on 100 parts by weight of the total amount of raw materials of urethane (meth)acrylate. When the blending amount of the (meth)acrylic compound is lower than 5 parts by weight, desired strength may not be obtained. In contrast, when the blending amount of the isocyanate compound exceeds 90 parts by weight, desired flexibility may not be obtained.

There is no limitation on the polyethylene glycol, and polyethylene glycols having a weight average molecular weight of 200 to 2,000, and more preferably 400 to 1,500, are preferable. When the weight average molecular weight is lower than 200, desired viscosity and physical properties may not be obtained in a resin composition. In contrast, when the weight average molecular weight exceeds 2,000, the molecular weight of a urethane (meth)acrylic resin exceeds 7,000, resulting in that desired compatibility with a vinyl ester resin may not be obtained.
The blending amount of polyethylene glycol is preferably 0.1 to 90 parts by weight, and more preferably 5 to 50 parts by weight, based on 100 parts by weight of the total amount of raw materials of urethane (meth)acrylate. When the blending amount of polyethylene glycol is lower than 0.1 part by weight, desired compatibility may not be obtained. In contrast, when the blending amount of polyethylene glycol exceeds 90 parts by weight, desired water resistant properties may not be obtained.

In the production of a urethane (meth)acrylate, it is possible to add, as an optional component, polyether polyol and/or adipate polyester polyol.
There is no limitation on the polyether polyol, and polyether polyols having a weight average molecular weight of 500 to 1,500, and more preferably 800 to 1,200, are preferable. When the weight average molecular weight is lower than 500, desired viscosity and physical properties may not be obtained in a resin composition. In contrast, when the weight average molecular weight exceeds 1,500, the molecular weight of a urethane (meth)acrylic resin exceeds 7,000, resulting in that desired compatibility with a vinyl ester resin may not be obtained.
When the polyether polyol is added, the blending amount of polyether polyol is preferably 5 to 90 parts by weight, and more preferably 20 to 60 parts by weight, based on 100 parts by weight of the total amount of raw materials of urethane (meth)acrylate. When the blending amount of polyether polyol is lower than 5 parts by weight, desired flexibility may not be obtained. In contrast, when the blending amount of polyether polyol exceeds 90 parts by weight, desired compatibility may not be obtained.

There is no limitation on the adipate polyester polyol, and adipate polyester polyols having a weight average molecular weight of 600 to 3,000, and more preferably 800 to 2,500, are preferable. When the weight average molecular weight is lower than 600, desired viscosity and physical properties may not be obtained in a resin composition. In contrast, when the weight average molecular weight exceeds 3,000, the molecular weight of a urethane (meth)acrylic resin exceeds 7,000, resulting in that desired compatibility with a vinyl ester resin may not be obtained.
When the adipate polyester polyol is added, the blending amount of adipate polyester polyol is preferably 0.1 to 90 parts by weight, and more preferably 5 to 50 parts by weight, based on 100 parts by weight of the total amount of raw materials of urethane (meth)acrylate. When the blending amount of adipate polyester polyol is lower than 0.1 part by weight, desired compatibility may not be obtained. In contrast, when the blending amount of adipate polyester polyol exceeds 90 parts by weight, desired water resistant properties may not be obtained.

The method of producing the urethane (meth)acrylate is not particularly limited, and the urethane (meth)acrylate can be produced by known methods using the above-mentioned ingredients. For example, the urethane (meth)acrylate can be produced by mixing an isocyanate compound having two or more isocyanate groups in one molecule and polyethylene glycol for reacting to generate a terminal isocyanate-containing prepolymer, and subsequently adding the (meth)acrylic compound having one or more hydroxy groups in one molecule to the prepolymer for reacting. It should be noted that, in the above-mentioned reaction, it is also possible to add catalysts such as dibutyltin dilaurate, tertiary amines, and phosphones. When the catalyst is added, the blending amount of the catalyst is preferably 0.0001 to 1 part by weight, and more preferably 0.001 to 0.5 part by weight based on 100 parts by weight of the total amount of raw materials of the urethane (meth)acrylate. When the blending amount of the catalyst is lower than 0.0001 part by weight, the reaction may not sufficiently proceed. In contrast, when the blending amount of the catalyst exceeds 1 part by weight, it may become difficult to control the reaction.

In the reaction, the reaction temperature is preferably 40 to 120°C. The reaction time is preferably 1 to 24 hours. When the reaction temperature is lower than 40°C or the reaction time is lower than 1 hour, the reaction does not sufficiently proceed, and desired urethane (meth)acrylate may not be obtained. In contrast, when the reaction temperature exceeds 120°C or the reaction time exceeds 24 hours, undesirable matters may occur in terms of the cost or the reaction control.

There is no limitation on the radical polymerizable unsaturated monomer used as a raw material of the urethane (meth)acrylic resin (B), and conventionally known radical polymerizable unsaturated monomers can be used. Examples of the radical polymerizable unsaturated monomers are the same as those in the vinyl ester resin (A) mentioned above.
The content of the radical polymerizable unsaturated monomer in the urethane (meth)acrylic resin (B) is preferably 20 to 60% by weight, and more preferably 30 to 50% by weight. When the content of the radical polymerizable unsaturated monomer is lower than 20% by weight, the workability may decrease by increase of the resin viscosity. In contrast, when the content of the radical polymerizable unsaturated monomer exceeds 60% by weight, desired toughness of a cured product may not be obtained.

The urethane (meth)acrylic resin (B) thus obtained has a weight average molecular weight of 2,000 to 8,000, and more preferably 3,000 to 6,500. In the case of the urethane (meth)acrylic resin (B) having a weight average molecular weight in the above-mentioned range, the resin becomes excellent in compatibility with the vinyl ester resin (A). Therefore, when a resin composition is produced using the resin, the urethane (meth)acrylic resin (B) is not microphase separated in the vinyl ester resin (A) at the time of curing. Therefore, such a resin composition provides a transparent cured product.

The radical polymerizable resin composition of the present invention can be produced by mixing the vinyl ester resin (A) and the urethane (meth)acrylic resin (B). In the production thereof, the mixing method is not particularly limited, and conventionally known methods can be used.
The weight ratio of the vinyl ester resin (A) to the urethane (meth)acrylic resin (B) is preferably 20:80 to 80:20, and more preferably 25:65 to 65:25. When the weight ratio of the vinyl ester resin (A) to the urethane (meth)acrylic resin (B) is excessively low, strength for withstanding practical use may not be obtained. In contrast, when the weight ratio of the vinyl ester resin (A) to the urethane (meth)acrylic resin (B) is excessively high, desired toughness may not be obtained.

Further, to the radical polymerizable resin composition of the present invention, an organic cobalt salt can be added from the viewpoint of promoting the curing and imparting drying properties. The organic cobalt salt is not particularly limited, and conventionally known organic cobalt salts can be used. Examples of organic cobalt salts include cobalt octylate, cobalt naphthenate, and cobalt hydroxide. The organic cobalt salts can be used singly or in combination. Among them, from the viewpoint of curing properties, cobalt octylate is preferable.
When the organic cobalt salt is added, the blending amount thereof is preferably 0.02 to 10 parts by weight, more preferably 0.1 to 5.0 parts by weight, and most preferably 0.1 to 3.0 parts by weight, based on 100 parts by weight of the total amount of the vinyl ester resin (A) and the urethane (meth)acrylic resin (B). When the blending amount of the organic cobalt salt is lower than 0.02 part by weight, the desired curing time period and the desired cured state are not obtained, possibly resulting in poor drying at low temperatures. In contrast, when the blending amount of the organic cobalt salt exceeds 10 parts by weight, desired pot life and desired storage stability may not be obtained.

Further, to the radical polymerizable resin composition of the present invention, an organic peroxide can be added as a radical polymerization initiator. There is no limitation on the organic peroxide, and conventionally known organic peroxides can be used. Examples of the organic peroxide include ketone peroxide, perbenzoate, hydroperoxide, diacylperoxide, peroxyketal, hydroperoxide, diallylperoxide, peroxy ester, and peroxy dicarbonate. Azo compounds and the like can also be used. More specifically, methylethyl ketone peroxide, cumene hydroperoxide, t-butylperbenzoate, benzoylperoxide, dicumylperoxide, diisopropyl peroxide, di-t-butyl peroxide, t-butyl peroxybenzoate, 1,1-bis(t-butylperoxy)-3,3,5-trimethyl cyclohexane, 2,5-dimethyl-2,5-bis(t-butylperoxy)hexyne-3,3-isopropylhydroperoxide, t-butylhydroperoxide, dicumylhydroperoxide, acetylperoxide, bis(4-t-butylcyclohexyl)peroxy dicarbonate, diisopropylperoxy dicarbonate, isobutylperoxide, 3,3,5-trimethylhexanoyl peroxide, lauryl peroxide, azobisisobutyronitrile, azobiscarboneamide, or the like may be used. Those organic peroxides may be used alone or in combination. In addition, among them, ketone peroxide, t-butylperbenzoate, benzoylperoxide, and cumene hydroperoxide are preferred from the viewpoint of cost, easy availability, and stability.
When the organic peroxide is added, the blending amount is preferably 0.1 to 7 parts by weight, and more preferably 0.5 to 5 parts by weight, based on 100 parts by weight of the total amount of the (A) vinyl ester resin and the (B) urethane (meth)acrylic resin. When the blending amount of the organic peroxide is lower than 0.1 part by weight, desired curing properties may not be obtained. In contrast, the blending amount of the organic peroxide exceeding 7 parts by weight is economically disadvantageous and may not achieve the desired physical properties in the cured product.

Further, to the radical polymerizable resin composition of the present invention, an aromatic tertiary amine can be added. There is no limitation on the aromatic tertiary amine, and conventionally known aromatic tertiary amines can be used. Examples of the aromatic tertiary amine include N,N-dimethylaniline, N,N-diethylaniline, N,N-dimethyl-p-toluidine, N-methyl-N-β-hydroxyethylaniline, N-butyl-N-β-hydroxyethylaniline, N-methyl-N-β-hydroxyethyl-p-toluidine, N-butyl-N-β-hydroxyethyl-p-toluidine, N-methyl-N-β-hydroxypropylaniline, N-methyl-N-β-hydroxypropyl-p-toluidine, N,N-di(β-hydroxyethyl)aniline, N,N-di(β-hydroxypropyl)aniline, N,N-di(β-hydroxyethyl)-p-toluidine, N,N-di(β-hydroxypropyl)-p-toluidine, and N,N-diisopropyrrole-p-toluidine. Those aromatic tertiary amines may be used alone or in combination. Among them, N,N-dimethylaniline, N,N-dimethyl-p-toluidine, N,N-di(β-hydroxyethyl)-p-toluidine, N,N-di(β-hydroxypropyl)-p-toluidine, and N,N-diisopropyrrole-p-toluidine are preferred from the viewpoint of curing properties.
When an aromatic tertiary amine is added, the blending amount is preferably 0.02 to 10 parts by weight, and more preferably 0.1 to 5 parts by weight, based on 100 parts by weight of the total amount of the vinyl ester resin (A) and the urethane (meth)acrylic resin (B). When the blending amount of the aromatic tertiary amine is lower than 0.02 part by weight, desired curing properties at low temperatures may not be obtained. In contrast, a blending amount of the aromatic tertiary amine exceeding 10 parts by weight is economically disadvantageous and may not achieve desired storage stability.

Further, to the radical polymerizable resin composition of the present invention, in the range where the properties of the radical polymerizable resin composition are not impaired, a silane coupling agent and a wetting agent can be added so as to improve the adhesiveness with glass fiber; a mold release agent ingredient such as zinc stearate can be added so as to improve the mold-release properties; and a paraffin wax and an organic manganese salt can be added so as to further improve the drying properties and the properties of a cured product.

### EXAMPLES

Hereinafter, the present invention will be described in more detail with reference to Examples, but is not limited thereto.

### [Preparation of vinyl ester resin (A)]

### (Synthesis Example I)

In a reactor equipped with a stirrer, a reflux condenser, a gas introducing pipe, and a thermometer, 1,890 g of Epikote 828 (epoxy resin manufactured by Yuka-Shell Epoxy Co., Ltd., epoxy equivalent = 189), 570 g of bisphenol A, and 12.3 g of triethylamine were placed. The mixture was reacted at 150°C for 2 hours under a nitrogen atmosphere. After the termination of the reaction, the resultant was cooled to 90°C. Then, to the reactant, 430 g of methacrylic acid, 9 g of tetradecyl dimethyl benzyl ammonium chloride, 0.9 g of hydroquinone, and 1,000 g of styrene were added. The mixture was further reacted at 90°C for 20 hours while blowing air. Then, the reaction was terminated when the acid number reached 10 mgKOH/g to thereby obtain vinyl ester. Subsequently, to the vinyl ester, 1,890 g of styrene was added to thereby obtain a bisphenol A vinyl ester resin (VE-1) having a viscosity at 25°C of 0.5 Pa·s and a solid content of 50% by weight. The weight average molecular weight of VE-1 was 4,300. Here, the weight average molecular weight was measured using a Shodex GPC system-21. It should be noted that the measurement of the weight average molecular weight in Synthesis Examples and Comparative Synthesis Examples described below was performed using the same apparatus.

### (Comparative Synthesis Example II)

In a reactor equipped with a stirrer, a reflux condenser, a gas introducing pipe, and a thermometer, 1,890 g of Epikote 828 (epoxy resin manufactured by Yuka-Shell Epoxy Co., Ltd., epoxy equivalent = 189), 798 g of bisphenol A, and 12.3 g of triethylamine were placed. The mixture was reacted at 150°C for 2 hours under a nitrogen atmosphere. After the termination of the reaction, the resultant was cooled to 90°C. Then, to the reactant, 258 g of methacrylic acid, 9 g of tetradecyl dimethyl benzyl ammonium chloride, 0.9 g of hydroquinone, and 1,000 g of styrene were added. The mixture was further reacted at 90°C for 20 hours while blowing air. Then, the reaction was terminated when the acid number reached 10 mgKOH/g to thereby obtain vinyl ester. Subsequently, to the vinyl ester, 1,890 g of styrene was added to thereby obtain a bisphenol A vinyl ester resin (VE-2) having a viscosity at 25°C of 1.0 Pa·s and a solid content of 50% by weight. The weight average molecular weight of VE-2 was 6,800.

### [Preparation of urethane (meth)acrylic resin (B)]

### (Synthesis Example 1)

In a 3L four-necked flask equipped with a stirrer, a reflux condenser tube, a gas introducing pipe, and a thermometer, 500 g of diphenylmethane diisocyanate, 700 g of Actcol P-22 (polyether polyol manufactured by MITSUI TAKEDA CHEMICAL, INC.: weight average molecular weight = 1,000), 180 g of TOHO polyethylene glycol #600 (polyethylene glycol manufactured by TOHO Chemical Industry Co., Ltd.: weight average molecular weight = 600), and 0.2 g of dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 1,093 g of styrene monomer was added to thereby obtain a urethane methacrylate resin (U-1). The weight average molecular weight of the urethane methacrylate resin (U-1) was 5,315.

### (Synthesis Example 2)

In a 3L four-necked flask equipped with a stirrer, a reflux condenser tube, a gas introducing pipe, and a thermometer, 500 g of diphenylmethane diisocyanate, 500 g of Actcol P-22 (polyether polyol manufactured by MITSUI TAKEDA CHEMICAL, INC.: weight average molecular weight =1,000), 60 g of TOHO polyethylene glycol #600 (polyethylene glycol manufactured by TOHO Chemical Industry Co., Ltd.: weight average molecular weight = 600), 400 g of Kuraray polyol P-1010 (adipate polyester polyol manufactured by Kuraray Co., Ltd.: weight average molecular weight = 1,000), and 0.15 g of dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 1,150 g of styrene monomer was added to thereby obtain a urethane methacrylate resin (U-2). The weight average molecular weight of the urethane methacrylate resin (U-2) was 5,821.

### (Synthesis Example 3)

In a 3L four-necked flask equipped with a stirrer, a reflux condenser tube, a gas introducing pipe, and a thermometer, 500 g of diphenylmethane diisocyanate, 800 g of Actcol P-22 (polyether polyol manufactured by MITSUI TAKEDA CHEMICAL, INC.: weight average molecular weight = 1,000), 90 g of TOHO polyethylene glycol #600 (polyethylene glycol manufactured by TOHO Chemical Industry Co., Ltd.: weight average molecular weight = 600), 100 g of Kuraray polyol P-2010 (adipate polyester polyol manufactured by Kuraray Co., Ltd.: weight average molecular weight = 2,000), and 0.15g dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 1,160 g of styrene monomer was added to thereby obtain a urethane methacrylate resin (U-3). The weight average molecular weight of the urethane methacrylate resin (U-3) was 6,890.

### (Synthesis Example 4)

In a 3L four-necked flask equipped with a stirrer, a reflux condenser tube, a gas introducing pipe, and a thermometer, 500 g of diphenylmethane diisocyanate, 600 g of TOHO polyethylene glycol #600 (polyethylene glycol manufactured by TOHO Chemical Industry Co., Ltd.: weight average molecular weight = 600), and 0.1 g of dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 900 g of styrene monomer was added to thereby obtain a urethane methacrylate resin (U-4). The weight average molecular weight of the urethane methacrylate resin (U-4) was 3,902.

### (Comparative Synthesis Example 1)

In Comparative Synthesis Example 1, a urethane methacrylate resin was prepared without using polyethylene glycol.
In a 3L four-necked flask equipped with a stirrer, a reflux condenser tube, a gas introducing pipe, and a thermometer, 500 g of diphenylmethane diisocyanate, 1,000 g of Actcol P-22 (polyether polyol manufactured by MITSUI TAKEDA CHEMICAL, INC.: weight average molecular weight = 1,000), and 0.15 g of dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 1,170 g of styrene monomer was added to thereby obtain a urethane methacrylate resin (U-5). The weight average molecular weight of the urethane methacrylate resin (U-5) was 5,918.

### (Comparative Synthesis Example 2)

In Comparative Synthesis Example 2, a urethane methacrylate resin was prepared by using propylene glycol in place of polyethylene glycol.
In a 3L four-necked flask equipped with a stirrer, a reflux condenser tube, a gas introducing pipe, and a thermometer, 500 g of diphenylmethane diisocyanate, 76 g of propylene glycol, and 0.5 g of dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 560 g of styrene monomer was added to thereby obtain a urethane methacrylate resin (U-6). The weight average molecular weight of the urethane methacrylate resin (U-6) was 1,403.

### (Comparative Synthesis Example 3)

In comparative Synthesis Example 3, a urethane methacrylate resin was prepared in the same manner as in Comparative Synthesis Example 1 without using polyethylene glycol.
In a 3L four-necked flask equipped with a stirrer, a reflux condenser tube, a gas introducing pipe, and a thermometer, 500 g of diphenylmethane diisocyanate, 700 g of Actcol P-22 (polyether polyol manufactured by MITSUI TAKEDA CHEMICAL, INC.: weight average molecular weight = 1,000), 300 g of Kuraray polyol C-1090 (carbonate polyester polyol manufactured by Kuraray Co., Ltd.: weight average molecular weight = 1,000), and 0.2 g of dibutyltin dilaurate were placed. The mixture was reacted while being stirred at 60°C for 4 hours. Subsequently, the reactant was stirred while 260 g of 2-hydroxyethyl methacrylate were added dropwise over 2 hours. After the termination of the dropwise addition, the resultant was reacted by stirring for 5 hours to thereby obtain urethane methacrylate. Subsequently, to the urethane methacrylate, 1,093 g of styrene monomer was added to thereby obtain a urethane methacrylate resin (U-7). The weight average molecular weight of the urethane methacrylate resin (U-7) was 6,473.

### [Preparation of radical polymerizable resin composition]

### (Examples 1 to 5 and Comparative Examples 1 to 4)

Radical polymerizable resin compositions were prepared using the ingredients in the proportions shown in Table 1. It should be noted that the unit of the amount of each ingredient shown in Table 1 is parts by weight.

The radical polymerizable resin compositions of Examples 1 to 5 and Comparative Examples 1 to 4 were evaluated for the compatibility and curing properties. Moreover, the cured products obtained from the radical polymerizable resin compositions were evaluated for the transparency and impact resistance. Here, the cured product was produced by pouring the radical polymerizable resin composition between glass plates disposed in such a manner that the thickness was adjusted to 3 mm, leaving the resultant to stand for a day to be cured at room temperature, and then subjecting the resultant to postcure at 120°C for 2 hours. At the time of evaluation, the cured product was cut to be used as a sample.

### Each evaluation was performed following the procedures described below. [Compatibility]

80 g of the resin composition prepared by each of Examples 1 to 5 and Comparative Examples 1 to 4 were put in a 100 ml (cc) screw bottle, and the compatibility of the resin composition when the bottle was stored at 23°C and 4°C for 3 months was evaluated by visual observation. In Table 1, ○ shows that the resin composition was transparent without separation or turbidity, and × shows that the resin composition showed separation and turbidity.

### [Curing properties]

The curing properties were measured according to JIS K 6901 (Liquid Unsaturated Polyester Resin Testing Method), and the gelling time at 25°C and the gelling time at 80°C were measured.

### [Transparency]

The transparency of the cured product was evaluated by visually observing the cured product. In Table 1, ○ shows that the cured products were transparent, and × shows that the cured product were cloudy.

### [Impact resistance]

The impact resistance was measured according to JIS K 6911 (Thermosetting plastic general testing method).
The evaluation results are shown in Table 1.

**[Table 1]**

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| VE-1 | | 70 | 70 | 70 | 70 | 60 | 70 | 60 | 57 | |
| VE-2 | | | | | | | | | | 60 |
| U-1 | | 30 | | | | 40 | | | | |
| U-2 | | | 30 | | | | | | | |
| U-3 | | | | 30 | | | | | | |
| U-4 | | | | | 30 | | | | | |
| U-5 | | | | | | | 30 | | | 30 |
| U-6 | | | | | | | | 40 | | |
| U-7 | | | | | | | | | 43 | |
| Methyl ethyl ketone peroxide ¹⁾ | | 1.6 | 1.6 | 1.6 | 1.6 | 1.6 | 1.6 | 1.6 | 1.6 | 1.6 |
| t-butyl perbenzoate ²⁾ | | 0.4 | 0.4 | 0.4 | 0.4 | 0.4 | 0.4 | 0.4 | 0.4 | 0.4 |
| Cobalt octylate | | 0.1 | 0.1 | 0.1 | 0.1 | 0.1 | 0.1 | 0.1 | 0.1 | 0.1 |
| N,N-dimethylaniline | | 0.04 | 0.04 | 0.04 | 0.04 | 0.04 | 0.04 | 0.04 | 0.04 | 0.04 |
| Compatibility | 4°C | ○ | ○ | ○ | ○ | ○ | × | × | × | x |
| | 23°C | ○ | ○ | ○ | ○ | ○ | × | × | ○ | × |
| Transparency | | ○ | ○ | ○ | ○ | ○ | × | × | × | × |
| Izod impact value (KJ/mm²) | | 36.1 | 34.3 | 43.4 | 33.0 | 30.0 | 18.0 | 21.0 | 19.3 | 21.3 |
| Gelling time (min.) | 25°C | 13 | 11 | 12 | 15 | 10 | 13 | 12 | 9 | 14 |
| | 80°C | 3.2 | 3.0 | 3.1 | 3.4 | 2.9 | 3.3 | 3.2 | 2.5 | 3.2 |

| | | | | | | | | | | |
|---|---|---|---|---|---|---|---|---|---|---|
| 1) Kayamek M [manufactured by Kayaku Akzo Corporation] 2) Kayabutyl B [manufactured by Kayaku Akzo Corporation] | | | | | | | | | | |

As shown in Table 1, even when the radical polymerizable resin compositions of Examples 1 to 5 were stored at a low temperature (4°C) and at room temperature (23°C), the radical polymerizable resin compositions were free from separation and turbidity and were excellent in compatibility. In contrast, when the radical polymerizable resin compositions of Comparative Examples 1 to 4 were stored at a low temperature (4°C), the radical polymerizable resin compositions showed separation or turbidity. In addition, when the radical polymerizable resin compositions of Comparative Examples 1, 2, and 4 were stored at room temperature (23°C), the radical polymerizable resin compositions showed separation or turbidity, as well. Further, the radical polymerizable resin compositions of Examples 1 to 5 were free from curing delay or the like and were excellent in curing properties.
Further, the cured products obtained from the radical polymerizable resin compositions of Examples 1 to 5 were transparent. In contrast, the cured products obtained from the radical polymerizable resin compositions of Comparative Examples 1 to 4 became cloudy. Further, the cured products obtained from the radical polymerizable resin compositions of Examples 1 to 5 had much higher Izod impact values than the cured products obtained from the radical polymerizable resin compositions of Comparative Examples 1 to 4.

As is shown by the results described above, the radical polymerizable resin composition of the present invention can provide cured products excellent in all the properties of impact resistance, corrosion resistance, and transparency.

## Claims

1. A radical polymerizable resin composition, comprising:
(A) a vinyl ester resin having a weight average molecular weight of 500 to 6,000, and
(B) a urethane (meth)acrylic resin obtained by reacting an isocyanate compound having two or more isocyanate groups in one molecule, a (meth)acrylic compound having one or more hydroxy groups in one molecule, and polyethylene glycol, wherein the weight average molecular weight of the urethane (meth)acrylic resin (B) is 2,000 to 8,000.

2. The radical polymerizable resin composition according to claim 1, wherein the urethane (meth)acrylic resin (B) is obtained by reacting an isocyanate compound having two or more isocyanate groups in one molecule, a (meth)acrylic compound having one or more hydroxy groups in one molecule, polyethylene glycol, and polyether polyol and/or adipate polyester polyol.

3. The radical polymerizable resin composition according to claim 1 or 2, wherein the isocyanate compound having two or more isocyanate groups in one molecule is diphenylmethane diisocyanate.

4. The radical polymerizable resin composition according to any one of claims 1 to 3, wherein the (meth)acrylic compound having one or more hydroxy groups in one molecule is 2-hydroxyethyl (meth)acrylate, 2-hydroxypropyl (meth)acrylate, or a mixture thereof.

5. The radical polymerizable resin composition according to any one of claims 1 to 4, wherein the vinyl ester resin (A) is a bisphenol vinyl ester resin, a novolac vinyl ester resin, a brominated vinyl ester resin, or a mixture thereof.

6. The radical polymerizable resin composition according to any one of claims 1 to 5, wherein the vinyl ester resin (A) and the urethane (meth)acrylic resin (B) contain 20 to 60% by weight of styrene.

7. The radical polymerizable resin composition according to any one of claims 1 to 6, wherein a weight ratio of the vinyl ester resin (A) to the urethane (meth)acrylic resin (B) is 20:80 to 80:20.

8. The radical polymerizable resin composition according to any one of claims 1 to 7, further comprising an organic peroxide, an organic cobalt salt, an aromatic tertiary amine, or a mixture thereof.

9. A use of the radical polymerizable resin composition as defined in any one of Claims 1 to 8 in an FRP lining or an FRP molded product.

## Patentansprüche

1. Radikalisch polymerisierbare Harzzusammensetzung, umfassend:
(A) ein Vinylesterharz mit einem gewichtsgemittelten Molekulargewicht von 500 bis 6.000 und
(B) ein Urethan-(Meth)acrylharz, erhalten durch Umsetzen einer Isocyanatverbindung, die zwei oder mehr Isocyanatgruppen in einem Molekül aufweist, einer (Meth)acrylverbindung, die ein oder mehr Hydroxygruppen in einem Molekül aufweist, und Polyethylenglycol, worin das gewichtsgemittelte Molekulargewicht des Urethan-(Meth)acrylharzes (B) 2.000 bis 8.000 beträgt.

2. Radikalisch polymerisierbare Harzzusammensetzung gemäß Anspruch 1, worin das Urethan-(Meth)acrylharz (B) erhalten ist durch Umsetzen einer Isocyanatverbindung, die zwei oder mehr Isocyanatgruppen in einem Molekül aufweist, einer (Meth)acrylverbindung, die ein oder mehr Hydroxygruppen in einem Molekül aufweist, Polyethylenglycol und Polyetherpolyol und/oder Adipat-Polyesterpolyol.

3. Radikalisch polymerisierbare Harzzusammensetzung gemäß Anspruch 1 oder 2, worin die Isocyanatverbindung, die zwei oder mehr Isocyanatgruppen in einem Molekül aufweist, Diphenylmethandiisocyanat ist.

4. Radikalisch polymerisierbare Harzzusammensetzung gemäß irgendeinem der Ansprüche 1 bis 3, worin die (Meth)acrylverbindung, die ein oder mehr Hydroxygruppen in einem Molekül aufweist, 2-Hydroxyethyl-(meth)acrylat, 2-Hydroxypropyl-(meth)acrylat oder eine Mischung hiervon ist.

5. Radikalisch polymerisierbare Harzzusammensetzung gemäß irgendeinem der Ansprüche 1 bis 4, worin das Vinylesterharz (A) ein Bisphenolvinylesterharz, ein Novolakvinylesterharz, ein bromiertes Vinylesterharz oder eine Mischung hiervon ist.

6. Radikalisch polymerisierbare Harzzusammensetzung gemäß irgendeinem der Ansprüche 1 bis 5, worin das Vinylesterharz (A) und das Urethan-(Meth)acrylharz (B) 20 bis 60 Gew.% Styrol enthalten.

7. Radikalisch polymerisierbare Harzzusammensetzung gemäß irgendeinem der Ansprüche 1 bis 6, worin das Gewichtsverhältnis des Vinylesterharzes (A) zum Urethan-(Meth)acrylharz (B) 20:80 bis 80:20 beträgt.

8. Radikalisch polymerisierbare Harzzusammensetzung gemäß irgendeinem der Ansprüche 1 bis 7, ferner umfassend ein organisches Peroxid, ein organisches Kobaltsalz, ein aromatisches, tertiäres Amin oder eine Mischung hiervon.

9. Verwendung der radikalisch polymerisierbaren Harzzusammensetzung wie in irgendeinem der Ansprüche 1 bis 8 definiert in einem Fasernetz eines faserverstärken Kunststoffes oder einem Formling eines faserverstärkten Kunststoffes.

## Revendications

1. Composition de résine pouvant être polymérisée par radicaux, comprenant :
(A) une résine d'ester de vinyle ayant une masse moléculaire moyenne en poids de 500 à 6 000, et
(B) une résine (méth)acrylique d'uréthane obtenue en faisant réagir un composé d'isocyanate ayant deux ou plusieurs groupes isocyanate dans une seule molécule, un composé (méth)acrylique ayant un ou plusieurs groupes hydroxy dans une seule molécule, et du polyéthylène glycol, dans lequel la masse moléculaire moyenne en poids de la résine (méth)acrylique d'uréthane (B) est de 2 000 à 8 000.

2. Composition de résine pouvant être polymérisée par radicaux selon la revendication 1, dans laquelle la résine (méth)acrylique d'uréthane (B) est obtenue en faisant réagir un composé d'isocyanate ayant deux ou plusieurs groupes isocyanate dans une seule molécule, un composé (méth)acrylique ayant un ou plusieurs groupes hydroxy dans une seule molécule, du polyéthylène glycol, et du polyol de polyéther et/ou du polyol d'adipate polyester.

3. Composition de résine pouvant être polymérisée par radicaux selon la revendication 1 ou 2, dans laquelle le composé d'isocyanate ayant deux ou plusieurs groupes isocyanate dans une seule molécule est du diisocyanate de diphénylméthane.

4. Composition de résine pouvant être polymérisée par radicaux selon l'une quelconque des revendications 1 à 3, dans laquelle le composé (méth)acrylique ayant un ou plusieurs groupes hydroxy dans une seule molécule est du 2-hydroxyéthyle (méth)acrylate, du 2-hydroxypropyle (méth)acrylate, ou un mélange de ceux-ci

5. Composition de résine pouvant être polymérisée par radicaux selon l'une quelconque des revendications 1 à 4, dans laquelle la résine d'ester de vinyle (A) est une résine d'ester de vinyle de bisphénol, une résine d'ester de vinyle de novolaque, une résine d'ester de vinyle bromée, ou un mélange de celles-ci.

6. Composition de résine pouvant être polymérisée par radicaux selon l'une quelconque des revendications 1 à 5, dans laquelle la résine d'ester de vinyle (A) et la résine (méth)acrylique d'uréthane (B) contiennent 20 à 60 % en poids de styrène.

7. Composition de résine pouvant être polymérisée par radicaux selon l'une quelconque des revendications 1 à 6, dans laquelle un rapport pondéral de la résine d'ester de vinyle (A) sur la résine (méth)acrylique d'uréthane (B) est de 20:80 à 80:20.

8. Composition de résine pouvant être polymérisée par radicaux selon l'une quelconque des revendications 1 à 7, comprenant en outre un peroxyde organique, un sel de cobalt organique, une amine tertiaire aromatique, ou un mélange de ceux-ci.

9. Utilisation de la composition de résine pouvant être polymérisée par radicaux selon l'une quelconque des revendications 1 à 8, dans un revêtement de FRP ou un produit moulé de FRP.
